# EUROPÄISCHE PATENTSCHRIFT

(11) **EP 2 458 301 B1**
(45) Veröffentlichungstag und Bekanntmachung des Hinweises auf die Patenterteilung: **30.07.2014**
(21) Anmeldenummer: 11006460.7
(22) Anmeldetag: 05.08.2011
(51) Int. Cl.: F24J 2/46, F24J 2/52, H01L 31/042, F24J 2/54

(54) **Vorrichtung zum Anordnen wenigstens eines Solarmoduls an einem Untergrund**
Device for attaching at least one solar module to a base
Dispositif d'agencement d'au moins un module solaire dans un sous-sol

(30) Priorität: 26.11.2010 DE 202010015848 U
(43) Veröffentlichungstag der Anmeldung: 30.05.2012
(73) Patentinhaber: Isfort, Frank, 48599 Gronau (DE)
(72) Erfinder: Isfort, Frank, 48599 Gronau (DE)
(74) Vertreter: Isfort, Olaf

(56) Entgegenhaltungen:
- DE-U1-202009 007 517
- US-A- 6 046 399

## Beschreibung

Die Erfindung betrifft eine Vorrichtung zum Anordnen wenigstens eines Solarmoduls an einem Untergrund, aufweisend wenigstens eine Basiseinheit, über die die Vorrichtung mit dem Untergrund verbindbar ist, zumindest eine mit der Basiseinheit verbindbare Halteeinheit, über welche die Vorrichtung mit dem Solarmodul verbindbar ist und die mindestens ein Trageelement, einen Abstandhalter und einen Verstellmechanismus umfasst, wobei die Position des Trageelementes relativ zu der Basiseinheit mittels des Verstellmechanismus verstellbar ist, wobei ein Rastmechanismus vorgesehen ist, über den die Halteeinheit an der Basiseinheit lösbar befestigbar ist.

Aus DE 20 2009 007 517 U1 ist ein Ständer für rechteckige Solarmodule bekannt, mit dem ein Solarmodul auf ein Flachdach geneigt montiert werden kann. Der Ständer umfasst einen waagerechten Träger, einen vom waagerechten Träger aufragenden Pfosten und eine den Pfosten und den Träger verbindende, geneigte Traverse, an der das Solarmodul befestigt werden kann. Die Position der Traverse ist relativ zu dem wagerechten Träger verstellbar, um den Neigungswinkel der Traverse bzw. eines daran angeordneten Solarmoduls einstellen zu können.

Die US 6,046,399 beschreibt eine Vorrichtung zum Anordnen von Solarmodulen auf einem Dach. Die Vorrichtung umfasst isolierte Blöcke mit daran angebundenen Metallplatten. Jede Metallplatte weist eine Montageklammer zur Halterung wenigstens eines Solarmoduls auf. Abstandhalter sind vorgesehen, um das jeweilige Solarmodul unter einem optimalen Winkel zu montieren.

Die DE 20 2009 007 517 1 beschreibt einen Ständer für Solarmodule, der dazu dient die Solarmodul auf einem Flachdach geneigt zu montieren. Der Ständer weist einen waagerechten Träger mit einem von dem waagerechten Träger aufragenden Pfosten auf. Außerdem ist eine den Pfosten und den Träger verbindende Traverse vorgesehen. Eine Halterung mit zwei zusammenhängenden, um eine waagerechte Achse gegeneinander verschwenkbaren Winkelstücken dient dazu, die geneigte Traverse mit dem waagerechten Träger und/oder mit dem Pfosten zu verbinden.

Aufgabe der Erfindung ist es, eine neuartige Vorrichtung zum Anordnen wenigstens eines Solarmoduls an einem Untergrund bereitzustellen, welche unter möglichst geringem Montageaufwand auch von einem Laien an dem Untergrund angeordnet werden kann.

Diese Aufgabe wird durch eine Vorrichtung gemäß Anspruch 1 gelöst.

Erfindungsgemäß ist die Halteeinheit ohne den Einsatz von Werkzeug und somit unter sehr geringem Montageaufwand mit der Basiseinheit verbindbar. Es ist allein eine Krafteinwirkung auf die Halteeinheit und/oder die Basiseinheit erforderlich, um eine gewünschte Verrastung von Teilen des Rastmechanismus herbeizuführen. Diese einfache Verbindbarkeit von Halteeinheit und Basiseinheit ermöglicht insbesondere, dass die Vorrichtung in Form eines Bausatzes an einen Einsatzort gebracht und dort auf einfache Art und Weise aufgestellt werden kann. Es sind keine aufwändigen Montagearbeiten wie beispielsweise bei DE 20 2009 007 517 U1 erforderlich, welche bereits vorab abseits des Einsatzortes vorgenommen werden müssten.

Als Untergrund kommt im Rahmen der Erfindung jegliche waagerecht oder geneigt angeordnete Fläche, wie beispielsweise eine Dachfläche oder der Freilandboden, in Betracht.

Die Erfindung sieht vor, dass die Halteeinheit ein Trageelement und einen Abstandhalter aufweist, wobei Trageelement und Abstandhalter jeweils einenends miteinander verbunden sind und anderenends den Rastmechanismus bildende Hakenelemente aufweisen, welche form- und kraftschlüssig in die Basiseinheit eingreifen. Gemäß dieser Variante entfällt das Rastelement, so dass das Trageelement und der Abstandhalter direkt mit der Basiseinheit verbunden werden. Die als Hakenelemente ausgebildeten Enden des Trageelementes und des Abstandhalters sind wie gewöhnliche Haken geformt und verfügen über eine ausreichende Biegung, um hinter Öffnungen in der Basiseinheit zu greifen. Die Befestigung des Tragelementes bzw. des Abstandhalters an der Basiseinheit erfolgt durch eine Drehung des Tragelementes bzw. des Abstandhalters, welche der Biegung des Hakenelementes folgt.

Es ist weiterhin möglich, dass das Hakenelement Nuten oder Vertiefungen aufweist, in welche ein dazu korrespondierendes Element, beispielsweise ein Vorsprung oder eine Öffnungskante, der Basiseinheit einrasten kann. Dies vermeidet zusätzlich ein ungewolltes Herausrutschen des Hakens aus der Öffnung.

Vorteilhaft ist, dass die Hakenelemente jeweils zwei zueinander parallel angeordnete Haken aufweisen. Somit ist eine einfachere Ausrichtung und Befestigung des Hakenelementes an der Basiseinheit möglich. Sofern Trageelement und Abstandhalter aus einem U-Profil gebildet sind, können die Haken jeweils an einem Schenkel des U-Profils ausgebildet sein.

Es ist vorgesehen, dass die Basiseinheit im Querschnitt im Wesentlichen U-förmig ausgebildet ist und zwei Schenkel aufweist, die jeweils zu den Hakenelementen korrespondierende Eingriffsöffnungen aufweisen. In diese Öffnungen an der Basiseinheit können die Haken der Hakenelemente form- und kraftschlüssig eingreifen. Durch die beim Einführen der Haken in die Öffnungen vollzogene Drehbewegung wird der Haken hinter die Öffnung gehakt, so dass er nach der Verbindung der gegenüberliegenden Enden von Trageelement und Abstandhalter nicht mehr aus der Öffnung entfernbar ist.

Für die Verbindung der den Hakenelementen abgewandten Enden des Tragelementes und des Abstandhalters empfiehlt es sich, dass diese mittels eines Positionierungselements zueinander ausrichtbar sind. Dieses Positionierungselement kann in einer besonders einfachen Ausgestaltung ein über die Begrenzung des Abstandhalters (oder alternativ auch des Trageelementes) hervorstehender Vorsprung sein, welcher beispielsweise im Falle eines aus einem U-Profil gebildeten Abstandhalters ein über die Seitenschenkel hervorstehender Verbindungsschenkel ist. An dem Trageelement (oder alternativ auch dem Abstandhalter) ist ein Schlitz in das Profil eingebracht, durch welches der Vorsprung eingreifen kann. Hierdurch werden Abstandhalter und Trageelement vorpositioniert und können besonders einfach mit weiteren Befestigungsmitteln verbunden werden, ohne dass sie sich während des Befestigungsvorganges gegeneinander verschieben. Vorteilhaft sind in dem Trageelement (bzw. dem Abstandhalter) mehrere Schlitze eingebracht, so dass das Trageelement verschiedene Winkelstellungen zu der Basiseinheit einnehmen kann. Sofern Trageelement und Abstandhalter beide aus einem U-Profil gefertigt sind, können ihre Endbereiche so ausgebildet sein, dass der Endbereich des einen formschlüssig von der Innenseite des anderen aufgenommen werden kann.

Eine Ausführungsform sieht vor, dass Trageelement und Abstandhalter nach der beschriebenen Vorpositionierung miteinander verschraubt werden. Sofern Trageelement und Abstandhalter wie vorbeschrieben U-förmig so ausgebildet sind, dass das eine formschlüssig in das andere eingreifen kann, ist es möglich, dass die Schraube (besonders einfach durch vorgefertigte Durchgangsbohrungen) seitlich durch die beiden Schenkel der U-Profile hindurch greift und somit bequem von der Seite festgezogen werden kann. Durch die seitliche Anordnung der Schraube hat der Monteur eine gute Sicht auf die Schraubverbindung.

Die Erfindung sieht vor, dass an dem Trageelement ein in Richtung des Solarmoduls weisendes Befestigungselement angeordnet ist, welches formschlüssig in einen korrespondierenden Eingriff des Solarmoduls eingreifbar ist. Besonders vorteilhaft ist das Befestigungselement an das Trageelement anschraubbar. Das an dem Trageelement angeordnete Befestigungselement kann so ausgebildet sein, dass es an einem Endbereich hakenförmig ausgestaltet ist und an dem gegenüberliegenden Endbereich in der Art einer Schiene, welche über Langlöcher verfügt. Dadurch ist es möglich, den hakenförmigen Endbereich in einen Eingriff des Solarmoduls einzuhaken. Dieser Eingriff auf der Rückseite des Solarmoduls kann beispielsweise ein Vorsprung, Hinterschnitt, Schlitz, Langloch oder dergleichen sein. Der schienenförmige Endbereich des Befestigungselementes kann so ausgestaltet sein, dass er ein Langloch trägt, welches zu einem auf dem Trageelement befindlichen Langloch korrespondiert. Die Langlöcher können dann in unterschiedlichen Stellungen zueinander positioniert werden, so dass unterschiedlich große Solarmodule montiert werden können oder auch eine unterschiedliche Position des Solarmoduls auf dem Trageelement möglich ist. Über das Befestigungselement wird das Solarmodul fest mit dem Trageelement verbunden.

Schließlich kann zwischen den beiden Abstandhaltern einer Vorrichtung noch eine Querstrebe angeordnet sein, welche der Vorrichtung insgesamt eine größere Querstabilität verleiht und eine gleichförmige Schrägstellung beider Abstandhalter sicherstellt.

Weitere Vorteile und Merkmale der vorliegenden Erfindung werden im Folgenden anhand der Figuren näher erläutert. Dabei zeigen
- Figur 1:: eine perspektivische Darstellung der Halteeinheit einer Vorrichtung in Transportstellung,
- Figur 2:: eine perspektivische Darstellung der in Figur 1 gezeigten Halteeinheit in Einsatzstellung,
- Figur 3:: eine perspektivische Darstellung der Basiseinheit,
- Figur 4:: eine perspektivische Darstellung der in den Figuren 1 und 2 gezeigten Halteeinheit sowie der in Figur 3 gezeigten Basiseinheit in einer nicht miteinander verbundenen Stellung,
- Figur 5:: eine perspektivische Darstellung entsprechend Figur 4 mit einer teilweisen Verbindung von Halteeinheit und Basiseinheit,
- Figur 6:: eine perspektivische Darstellung gemäß Figuren 4 und 5 mit über den Rastmechanismus mit der Halteeinheit verbundener Basiseinheit,
- Figur 7:: eine weitere perspektivische Darstellung des in Figur 6 Gezeigten, und
- Figur 8:: eine perspektivische Darstellung einer Vorrichtung mit zwei Halteeinheiten.
- Figur 9, 10:: Eine Basiseinheit mit Trageelement und Abstandhalter,
- Figur 11:: eine erfindungsgemäße Verbindung zwischen Trageelement und Abstandhalter,
- Figur 12:: eine fertig montierte Vorrichtung mit noch nicht montiertem Solarmodul,
- Figur 13, 14:: eine erfindungsgemäße Befestigung zwischen einem Trageelement und einem Solarmodul,
- Figur 15:: eine erfindungsgemäße Befestigung des gegenüberliegenden Endbereiches des Trageelementes,
- Figur 16:: eine fertig montierte Vorrichtung mit Querstrebe .

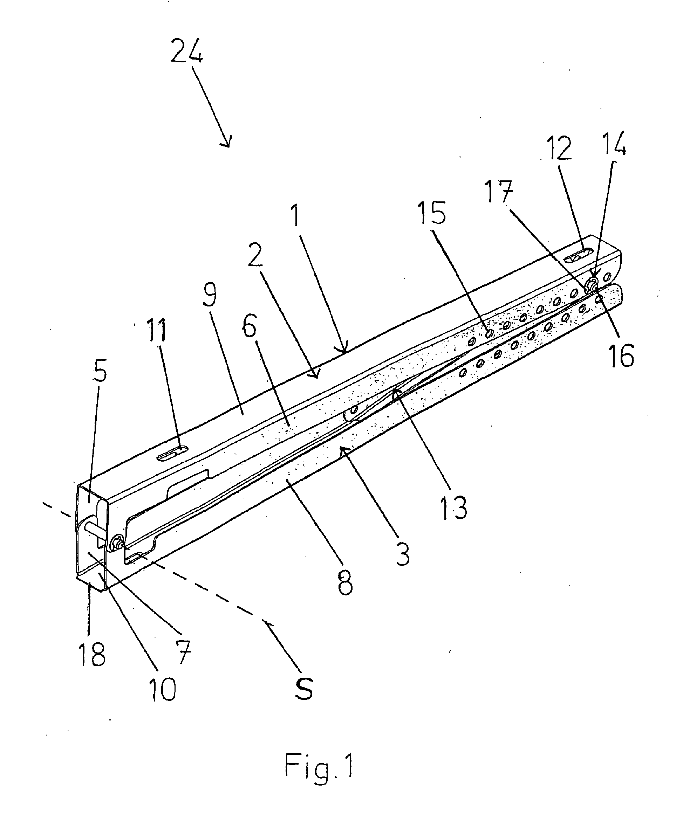

Die Figuren 1 bis 8 zeigen kein Ausführungsbeispiel der Erfindung.

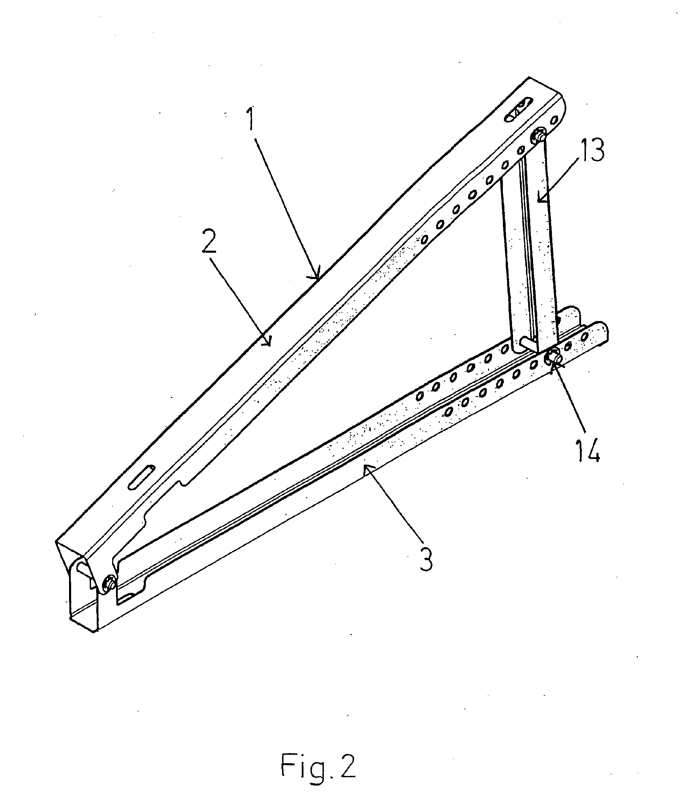

Figur 1 zeigt eine perspektivische Darstellung der Halteeinheit 1 einer Vorrichtung 24, wobei sich die Halteeinheit 1 in ihrer Transportstellung befindet. Aus dieser Transportstellung kann die Halteeinheit 1 in ihre Einsatzstellung überführt werden, wie sie in Figur 2 dargestellt ist.

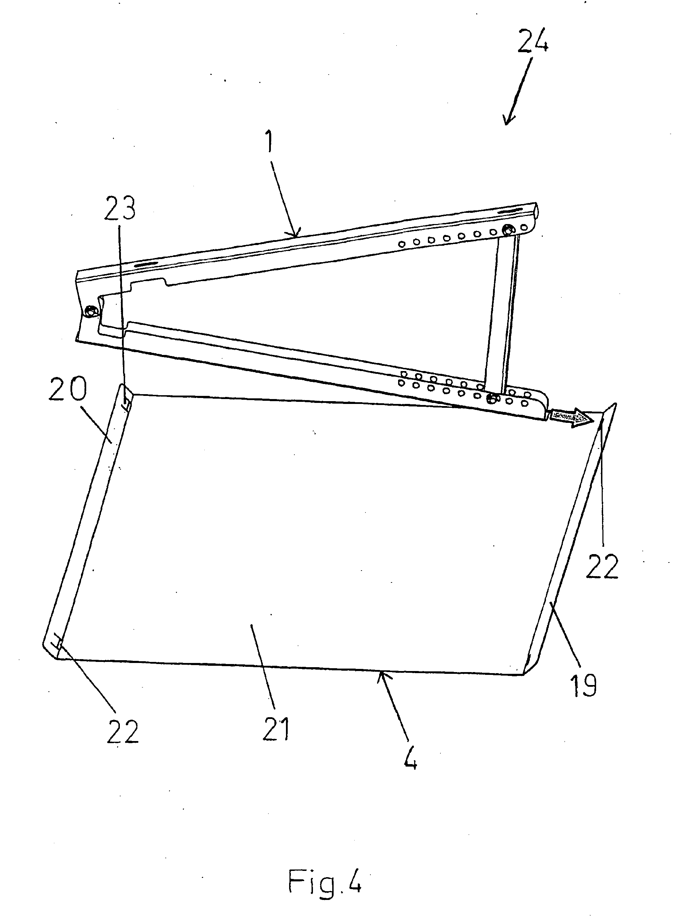

Die Halteeinheit 1 umfasst ein Trageelement 2 und ein Rastelement 3. Das Trageelement 2 ist mit einem nicht gezeigten Solarmodul verbindbar, um letzteres auf gewünschte Art und Weise zu tragen. Die Funktionsweise des Rastelementes 3 wird aus den Figuren 4 bis 8 deutlich.

Das Trageelement 2 und das Rastelement 3 sind lang gestreckt und im Querschnitt im Wesentlichen U-förmig ausgebildet. Sie weisen jeweils zwei Schenkel 5 und 6 bzw. 7 und 8 auf, die über einen Steg 9 bzw. 10 miteinander verbunden sind. Das Trageelement 2 und das Rastelement 3 sind jeweils an dem links dargestellten Ende um eine Schwenkachse S schwenkbar miteinander verbunden. Hierzu sind in den Schenkeln 5 bis 8 Öffnungen eingebracht, durch die ein Bolzen geführt ist, der über Sprengringe an dem Rastelement 3 und dem Trageelement 2 festgelegt ist. Das Trageelement 2 weist des Weiteren Mittel zum Befestigen eines Solarmoduls an der Halteeinheit 1 in Form von Langlöchern 11 und 12 auf.

Die Halteeinheit 1 weist weiter einen Abstandhalter 13 auf, der im Querschnitt ebenfalls im Wesentlichen U-förmig ausgebildet ist. Der Abstandhalter 13 ist über eine Bolzenverbindung 14 mit dem Trageelement 2 verbunden. Das Trageelement 2 und das Rastelement 3 weisen an den jeweilig den der Schwenkachse S zugewandten Enden gegenüberliegenden, rechts dargestellten Endbereichen mehrere an den Schenkeln 5 und 6 bzw. 7 und 8 in Längserstreckung verlaufend angeordnete Verbindungsöffnungen 15 auf. Über diese Verbindungsöffnungen 15 ist das Trageelement 2 mittels einer Bolzenverbindung 14 mit dem Abstandhalter 13 verbunden ist. Die Bolzenverbindung 14 umfasst hierzu einen durch Verbindungsöffnung 15 an den Schenkeln 5 und 6 sowie entsprechend in den Schenkeln des Abstandhalters 13 ausgebildeten Verbindungsöffnungen geführten Bolzen 16 auf, der über Sprengringe 17 an dem Trageelement 2 festgelegt ist. Über die gezeigte Vielzahl von Verbindungsöffnungen 15 an dem Trageelement 2 und dem Rastelement 3 ist es möglich, dass der Abstandhalter 13 an unterschiedlichen Positionen mit dem Rastelement 3 und dem Trageelement 2 verbunden werden kann, um eine bestimmte Relativstellung zwischen Trageelement 2 und Rastelement 3 zu fixieren.

Das Rastelement 3 weist an seinen in Axialrichtung gegenüberliegenden Enden jeweils einen Rastvorsprung 18 auf, von denen in Figur 1 nur der am linken Ende des Rastelementes 18 angeordnete erkennbar ist. Die Rastvorsprünge 18 bilden einen Teil des Rastmechanismus.

Der Übersichtlichkeit halber sind in den Figuren 2 bis 8 nur die im Folgenden angesprochenen Komponenten der Vorrichtung 24 mit Bezugszeichen gekennzeichnet.

Figur 2 ist eine perspektivische Darstellung der in Figur 1 gezeigten Halteeinheit 1 in ihrer Einsatzstellung, in der das Trageelement 2 unter einem gewünschten Winkel zum Rastelement 3 angeordnet ist. Diese Relativstellung von Rastelement 3 und Trageelement 2 ist über den Abstandhalter 13 fixiert, welcher gemäß Figur 2 auch mit dem Rastelement 3 über eine Bolzenverbindung 14 verbunden ist.

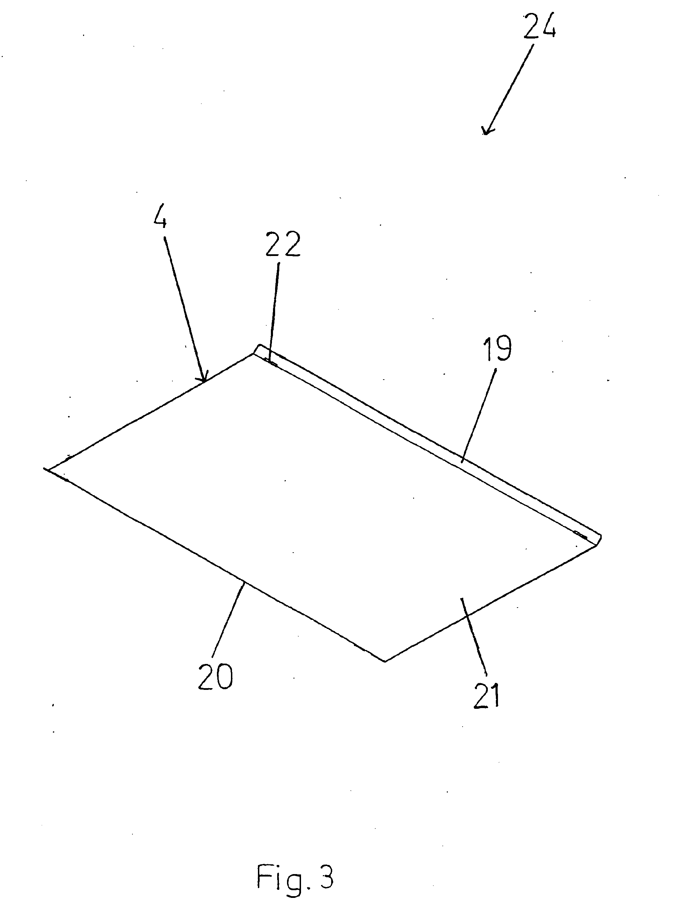

Figur 3 zeigt eine perspektivische Darstellung der Basiseinheit 4 der Vorrichtung 24. Die Basiseinheit 4 ist im Querschnitt im Wesentlichen U-förmig ausgebildet und weist zwei Schenkel 19 und 20 sowie einen diese verbindenden Steg 21 auf. Die Basiseinheit 4 umfasst vier Rastöffnungen 22, die in den Schenkeln 19 und 20 angrenzend zu dem Steg 21 angeordnet sind. Um die in den Figuren 1 und 2 gezeigten Halteeinheit 1 mit der Basiseinheit 4 verbinden zu können, entspricht die sich zwischen den Schenkeln 19 und 20 erstreckende Breite des Stegs 21 der Länge des Rastelementes 3 abzüglich der Rastvorsprünge 18. Die Rastöffnungen 22 sind durch Ausstanzungen hergestellt.

Figur 4 zeigt eine perspektivische Darstellung der Vorrichtung 24 in nicht vollständig montierter Stellung. Die Halteeinheit 1 befindet sich in ihrer in Figur 2 gezeigten Einsatzstellung. Die Rastöffnungen 22 des Schenkels 20 der Basiseinheit 4 weisen jeweils ein Schnappelement 23 auf, welches bei bestimmungsgemäßer Anordnung des Rastelementes 3 an der Basiseinheit 4 den entsprechenden Rastvorsprung 18 des Rastelementes 3 lösbar hintergreifen.

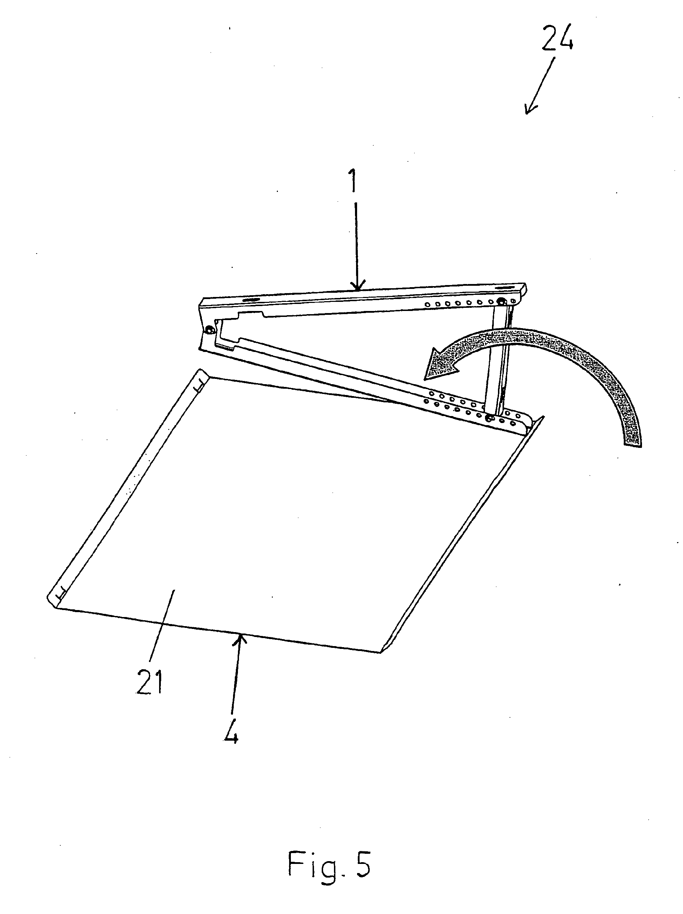

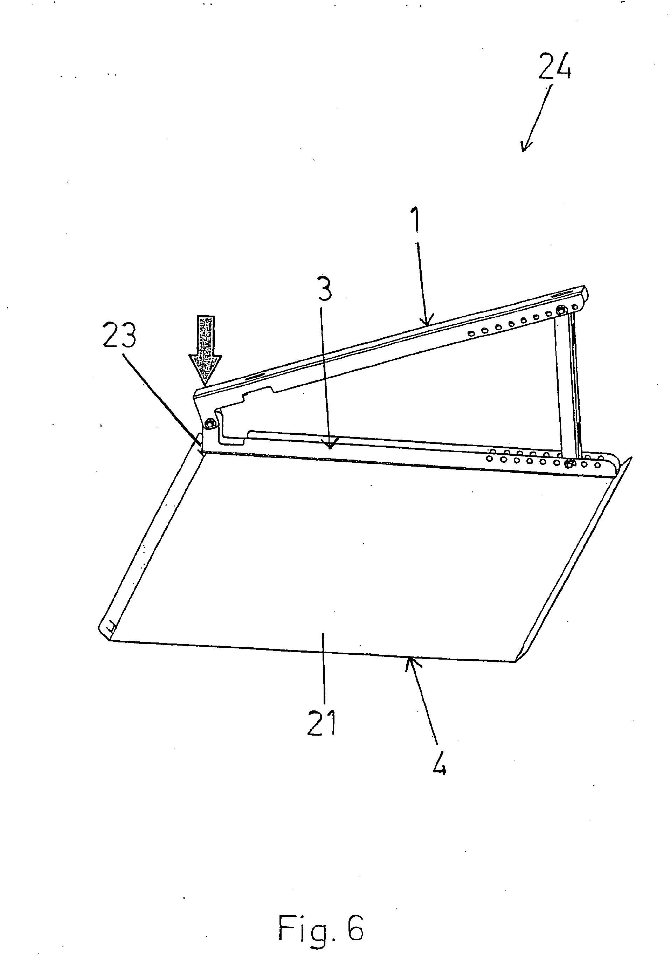

Zum Befestigen der Halteeinheit 1 an der Basiseinheit 4 wird zunächst der Rastvorsprung 18 am rechts dargestellten Ende des Rastelementes 3 gemäß dem Pfeil in Figur 4 in die Rastöffnung 22 am Schenkel 19 der Basiseinheit 4 eingeführt. Anschließend wird das links dargestellte Ende der Halteeinheit 1 in Richtung des Stegs 21 der Basiseinheit 4 bewegt, was durch den Pfeil in Figur 5 angedeutet sein soll. Hierdurch wird das Rastelement 3 bis in seine Raststellung gebracht, wie sie in Figur 6 gezeigt ist. In dieser Raststellung ist der am linken Ende des Rastelementes 3 angeordnete Rastvorsprung 18 an dem Schnappelement 23 unter Deformation desselben vorbeigeführt worden. Bei Erreichen der Raststellung des Rastelementes 3 schnappt das Schnappelement 23 in seine undeformierte Stellung zurück und hintergreift damit lösbar den Rastvorsprung 18.

Die Schwenkachse S ist in der in Figur 6 gezeigten bestimmungsgemäßen Anordnung der Halteeinheit 1 an der Basiseinheit 4 parallel und beabstandet zur Längserstreckung des Stegs 21 und der Schenkel 19 und 20 ausgerichtet.

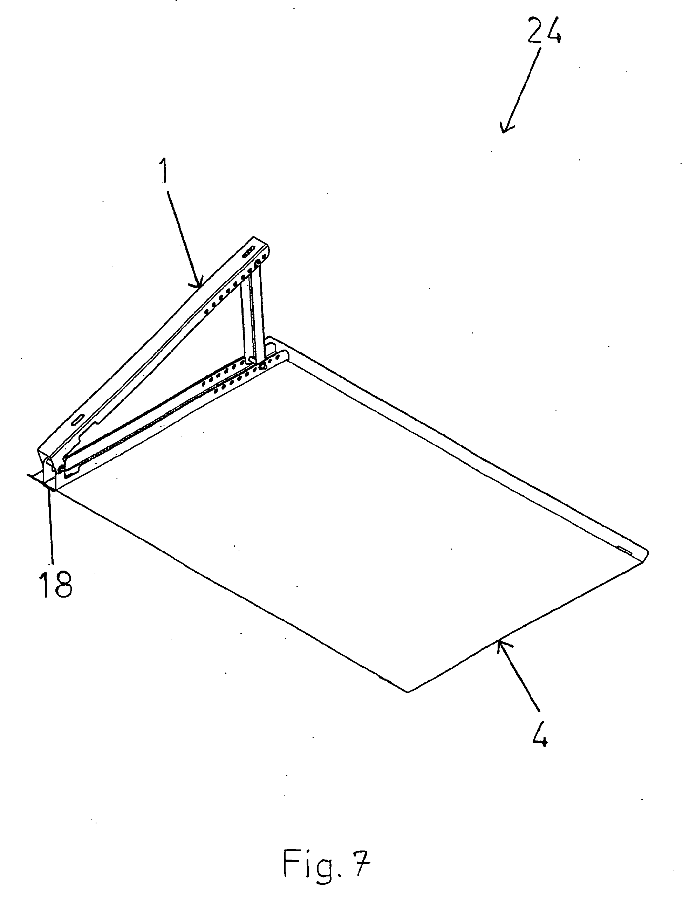

Figur 7 zeigt eine weitere perspektivische Darstellung der in Figur 6 gezeigten Vorrichtung 24, wobei der Rastvorsprung 18 am linken Ende des Rastelementes 3 zu erkennen ist, der von dem Schnappelement 23 hintergriffen wird, um die Halteeinheit 1 lösbar an der Basiseinheit 4 zu befestigen.

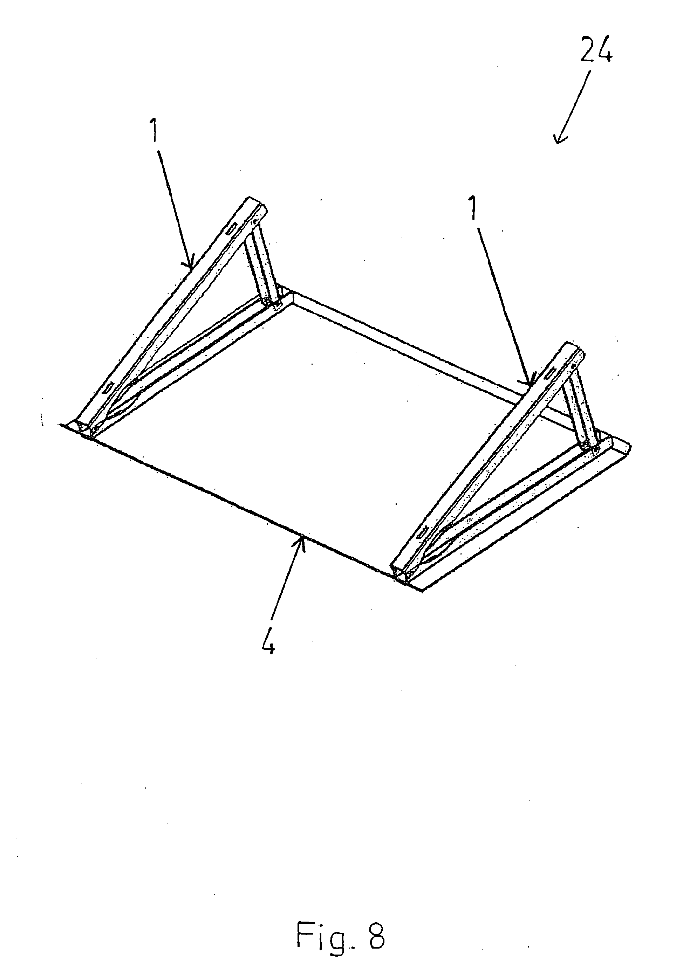

Figur 8 zeigt perspektivisch die Vorrichtung 24 in ihrer Einsatzstellung. Gemäß dieser Ausführungsform weist die Vorrichtung 24 zwei Halteeinheiten 1 auf, welche ein Solarmodul halten können.

Die Basiseinheit 4 ist wannenartig ausgestaltet. Sie kann mit einem Schüttgut befüllt werden, um der Vorrichtung 24 ausreichend Halt an einem Untergrund zu geben. Soll die Vorrichtung 24 wieder demontiert werden, kann einfach das Schüttgut wieder von der Basiseinheit 4 entfernt werden, wonach durch Lösen der Rastmechanismen mit Hilfe eines Schlitzschraubenziehers oder ähnlichem die Halteinheiten 1 von der Basiseinheit 4 gelöst werden können. Anschließend wird der Bolzen 16 vom Trageelement 2 oder vom Rastelement 1 gelöst, wodurch die Vorrichtung 24 insgesamt in ihre Transportstellung gebracht werden kann.

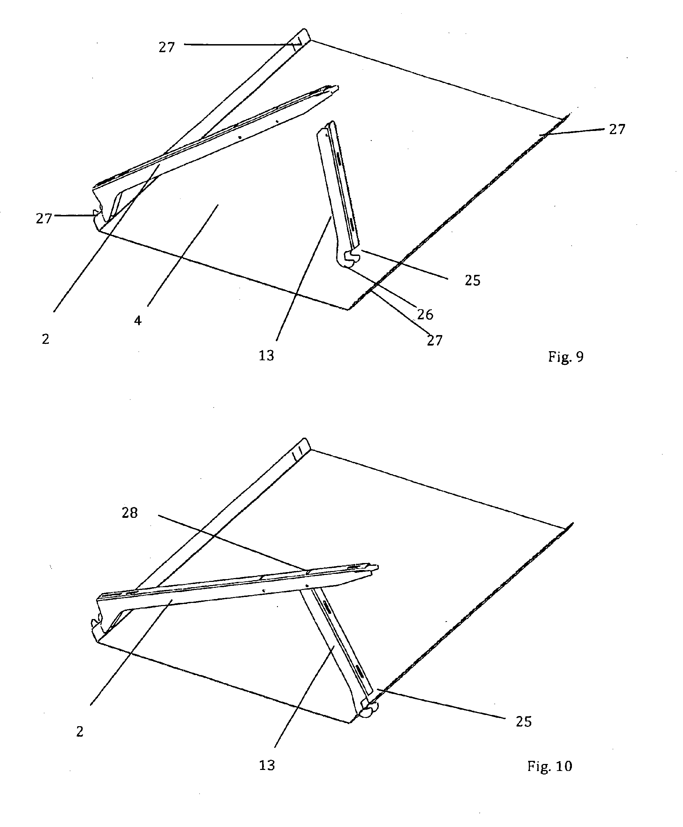

Die Figuren 9 bis 16 zeigen Ausführungsbeispiele gemäß der Erfindung.

Figur 9 und 10 zeigen eine Basiseinheit 4 mit einem Trageelement 2 und einem Abstandhalter 13. Das Trageelement 2 und der Abstandhalter 13 weisen an ihren Enden Hakenelemente 25 mit jeweils zwei Haken 26 auf. Das Trageelement 2 ist mittels seines Hakenelementes 25 in eine der vier Eingriffsöffnungen 27 der Basiseinheit 4 eingesteckt.

Der Abstandhalter 13 ist in Figur 9 noch nicht montiert. In Figur 10 sind sowohl Trageelement 2 als auch Abstandhalter 13 mit der Basiseinheit 4 verbunden.

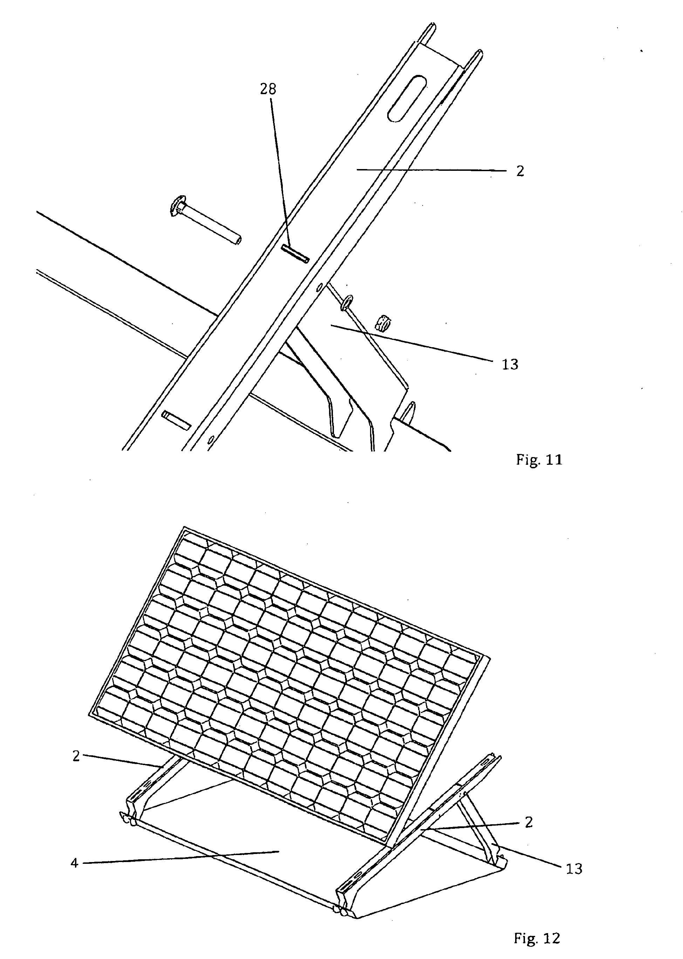

In Figur 10 und 11 sind Trageelement 2 und Abstandhalter 13 miteinander verbunden. Der aus einem U-Profil gefertigte Abstandhalter 13 weist an seinem dem Hakenelement 25 gegenüberliegenden Ende ein Positionierungselement 28 in Form eines Profilüberstandes auf. Dieses ist gemäß Figur 11 in eine Öffnung am ebenfalls U-förmigen Trageelement 2 gesteckt. Der Endbereich des Abstandhalters 13 kann in das U-Profil des Trageelementes 2 eingeführt werden. Eine seitlich durch die Schenkel der U-Profile geschobene Schraube (Figur 11) verbindet das Trageelement 2 und den Abstandhalter 13 miteinander.

Figur 12 zeigt die fertig montierte Vorrichtung mit Basiselement 4, und jeweils zwei darauf montierten Einheiten aus Trageelement 2 und Abstandhalter 13. Auf die Trageelemente 2 wird das Solarmodul installiert.

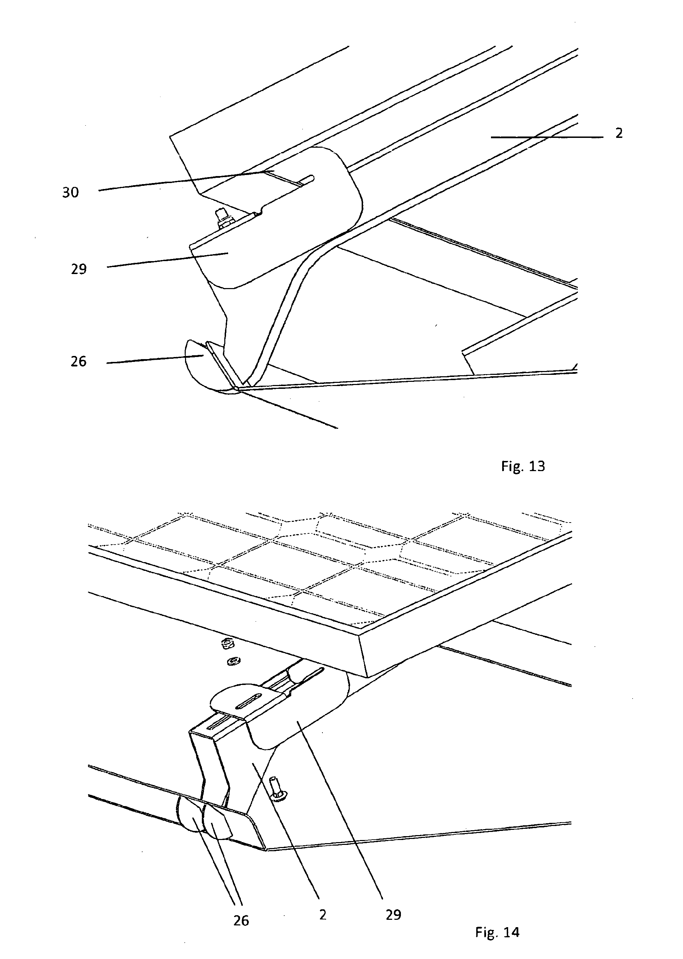

In Figur 13 und 14 sind zwei seitliche Ansichten der Vorrichtung mit daran angeordnetem Befestigungselement 29 dargestellt. Zu erkennen sind die Basiseinheit 4 und ein Trageelement 2, welche durch ein Hakenelement 25 mit der Basiseinheit 4 verbunden ist. Das Befestigungselement 29 verfügt über einen hakenförmigen Endbereich, welcher in einen Eingriff 30 an der Unterseite des Solarmoduls eingreift. Der andere Endbereich des Befestigungselementes 29 ist schienenförmig ausgebildet und verfügt über ein Langloch, welches mit einem Langloch auf dem Trageelement 2 korrespondiert. Desweiteren ist der schienenförmige Endbereich wie ein Winkelprofil ausgebildet, so dass es formschlüssig um eine Seitenkante des Trageelementes gelegt werden kann.

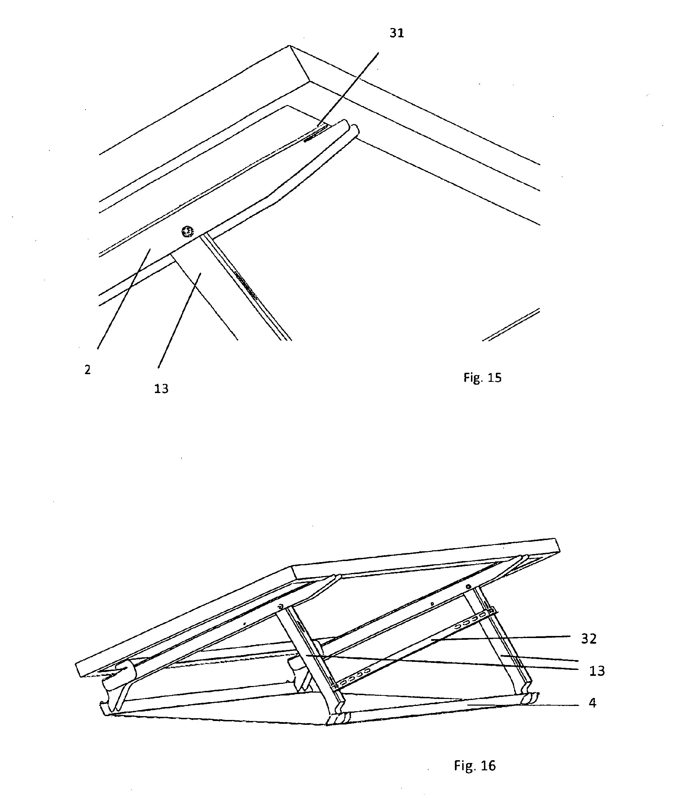

In Figur 15 ist das dem Befestigungselement 29 abgewandte Ende des Trageelementes 2 gezeigt, welches mit seinem Endbereich ebenfalls in eine Öffnung 31 auf der Unterseite des Solarmoduls eingreift.

Figur 16 schließlich zeigt eine komplett montierte Vorrichtung mit darauf angeordnetem Solarmodul. Zwischen den Abstandhaltern 13 der Vorrichtung ist zusätzlich eine Querstrebe 31 montiert.

Bei der Montage wird die Basiseinheit 4 mit zwei Trageelementen 2 und zwei Abstandhaltern 13 verbunden. Hierzu werden die an einer Endseite der Trageelemente 2 bzw. Abstandhalter 13 befindlichen Hakenelemente 25 so mit Öffnungen in den Schenkeln der U-förmig ausgebildeten Basiseinheit 4 verbunden, dass die Haken 26 durch die Öffnungen und um das Material der Basiseinheit 4 herumgreifen. Dabei vollzieht der Monteur eine einfache Drehbewegung bis die Haken 26 vollständig eingerastet sind. Sodann werden Trageelement 2 und Abstandhalter 13 miteinander verbunden. Hierzu wird das Trageelement 2 mit seiner nach unten weisenden Seite auf den Endbereich des Abstandhalters 13 gelegt, welcher dort ein Positionierungselement 28 aufweist. Dieses Positionierungselement 28 wird in einen dazu korrespondierenden Schlitz des Trageelementes 2 eingesteckt. Das Trageelement 2 weist mehrere solcher Schlitze auf, so dass je nach Wahl des Schlitzes eine unterschiedliche Neigung des Trageelementes 2 und damit auch des Solarmoduls erreicht werden kann. Nach der Vorpositionierung von Trageelement 2 und Abstandhalter 13 werden diese zusätzlich mit einer Schraube gesichert, welche von der Seite durch das Trageelement 2 und den darin angeordneten Endbereich des Abstandhalters 13 geschoben wird. Es ist ohne weiteres auch eine Ausführungsform denkbar, bei welcher der Abstandhalter 13 auf dem Trageelement 2 ruht.

Anschließend kann die Basiseinheit 4 an ihrem Bestimmungsort aufgestellt werden. Zur Sicherung vor Verschiebung kann die nach oben weisende Seite der Basiseinheit 4 beispielsweise mit Schüttgut belegt werden, so dass eine ausreichende Gewichtskraft auf ihr ruht. Ebenfalls wäre es auch möglich, die Basiseinheit 4 an einen Untergrund anzuschrauben.

Zweckmäßig erst danach wird das Solarmodul auf die fertig montierte Vorrichtung installiert. Dazu wird das Solarmodul zuerst gemäß Figur 15 mit dem Endbereich des Trageelementes 2 verbunden, welcher dem Abstandhalter 13 am nächsten ist. Das Ende des Trageelementes 2 wird dabei (teilweise oder auch ganz) in eine Öffnung 31 auf der Unterseite des Solarmoduls eingesteckt. Danach erfolgt die Befestigung des Solarmoduls am gegenüberliegenden Ende des Trageelementes 2. Dazu dient das Befestigungselement 29, welches (gemäß Figur 13) einen hakenförmigen und einen schienenförmigen Endbereich aufweist. Der hakenförmige Endbereich wird auf der Unterseite des Solarmoduls in einen Eingriff 30 eingehakt. Sodann wird das Befestigungselement 29 im Wesentlichen in Richtung der Haken 26 des Trageelementes 2 gezogen bis das Solarmodul fest mit der Vorrichtung verbunden ist. Dabei liegen die auf dem Trageelement 2 und dem Befestigungselement 29 angeordneten Langlöcher übereinander und können miteinander verschraubt werden. Wahlweise kann nun (oder auch in einem vorhergehenden Montageschritt) noch die Querstrebe 32 zwischen den Abstandhaltern 13 angebracht werden. Auch hierzu dienen Langlöchern sowohl in der Querstrebe 32 als auch den Abstandhaltern 13.

## Patentansprüche

1. Vorrichtung (24) zum Anordnen wenigstens eines Solarmoduls an einem Untergrund, aufweisend wenigstens eine Basiseinheit (4), über die die Vorrichtung (24) mit dem Untergrund verbindbar ist, zumindest eine mit der Basiseinheit (4) verbindbare Halteeinheit (1), über welche die Vorrichtung (24) mit dem Solarmodul verbindbar ist und die mindestens ein Trageelement (2), einen Abstandhalter (13) und einen Verstellmechanismus umfasst, wobei die Position des Trageelementes (2) relativ zu der Basiseinheit (4) mittels des Verstellmechanismus verstellbar ist, wobei ein Rastmechanismus vorgesehen ist, über den die Halteeinheit (1) an der Basiseinheit (4) lösbar befestigbar ist, **dadurch gekennzeichnet, dass** Trageelement (2) und Abstandhalter (13) jeweils einenends miteinander verbunden sind und anderenends den Rastmechanismus bildende Hakenelemente (25) aufweisen, welche form- und kraftschlüssig in die Basiseinheit (4) eingreifen.

2. Vorrichtung (24) nach Anspruch 1, **dadurch gekennzeichnet, dass** die Hakenelemente (25) jeweils zwei zueinander parallel angeordnete Haken (26) aufweisen.

3. Vorrichtung (24) nach Anspruch 1 oder 2, **dadurch gekennzeichnet, dass** die Basiseinheit (4) im Querschnitt im Wesentlichen U-förmig ausgebildet ist und zwei Schenkel (19, 20) aufweist, die jeweils zu den Hakenelementen (25) korrespondierende Eingriffsöffnungen (27) aufweisen.

4. Vorrichtung (24) nach einem der Ansprüche 1 bis 3, **dadurch gekennzeichnet, dass** Trageelement (2) und Abstandhalter (13) mittels eines Positionierungselements (28) zueinander ausrichtbar sind.

5. Vorrichtung (24) nach einem der Ansprüche 1 bis 4, **dadurch gekennzeichnet, dass** Trageelement (2) und Abstandhalter (13) miteinander verschraubt sind.

6. Vorrichtung (24) nach einem der Ansprüche 1 bis 5, **dadurch gekennzeichnet, dass** an dem Trageelement (2) ein in Richtung des Solarmoduls weisendes Befestigungselement (29) angeordnet ist, welches formschlüssig in einen korrespondierenden Eingriff (30) des Solarmoduls eingreifbar ist.

7. Vorrichtung (24) nach einem der Ansprüche 1 bis 6, **dadurch gekennzeichnet, dass** das Befestigungselement (29) an das Trageelement (2) anschraubbar ist.

## Claims

1. Apparatus (24) for arranging at least one solar module on a support surface, having at least one base unit (4), by way of which the apparatus (24) can be connected to the support surface, at least one holding unit (1) which can be connected to the base unit (4) and by way of which the apparatus (24) can be connected to the solar module and which includes at least a carrier element (2), a spacer (13) and an adjusting mechanism, wherein the position of the carrier element (2) relative to the base unit (4) is adjustable by means of the adjusting mechanism, wherein there is provided a latching mechanism by way of which the holding unit (1) can be releasably fixed to the base unit (4), **characterised in that** the carrier element (2) and the spacer (13) are respectively connected together at one end and at the other end have hook elements (25) which form the latching mechanism and which engage into the base unit (4) in positively locking and force-locking relationship.

2. Apparatus (24) according to claim 1 **characterised in that in that** the hook elements (25) respectively have two mutually parallel hooks (26).

3. Apparatus (24) according to claim 1 or claim 2 **characterised in that** the base unit (4) is of a substantially U-shaped configuration in cross-section and has two limbs (19, 20) respectively having engagement openings (27) corresponding to the hook elements (25).

4. Apparatus (24) according to one of claims 1 to 3 **characterised in that** the carrier element (2) and the spacer (13) can be oriented relative to each other by means of a positioning element (28).

5. Apparatus (24) according to one of claims 1 to 4 **characterised in that** the carrier element (2) and the spacer (13) are screwed together.

6. Apparatus (24) according to one of claims 1 to 5 **characterised in that** arranged on the carrier element (2) is a fixing element (29) which faces in the direction of the solar module and which can be engaged in positively locking relationship into a corresponding engagement means (30) of the solar module.

7. Apparatus (24) according to one of claims 1 to 6 **characterised in that** the fixing element (29) can be screwed to the carrier element (2).

## Revendications

1. Dispositif (24) permuttant d'agencer au moins un module solaire sur un support, comportant au moins une unité de base (4), par laquelle le dispositif (24) peut être assemblé au support, au moins une unité de fixation (1), qui est destinée à être assemblée à l'unité de base (4) et par laquelle le dispositif (24) peut être assemblé au module solaire et qui comporte au moins un élément de support (2), un écarteur (13) et un mécanisme de régalage, la position de l'élément de support (2) par rapport à l'unité de base (4) pouvant être réglée au moyen du mécanisme de réglage, un mécanisme de blocage étant prévu, par lequel l'unité de fixation (1) peut être fixée de manière amovible à l'unité de base (4), **caractérisé en ce que** l'élément de support (2) et l'écarteur (13) sont reliés l'un à l'autre chacun par une extrémité et comportent à l'autre extrémité des éléments de crochet (25), qui constituent le mécanisme de blocage et qui s'engagent par conjugaison de forme et par force dans l'unité de base (4).

2. Dispositif (24) selon la revendication 1, **caractérisé en ce que** les éléments de crochet (25) comportent chacun deux crochets (26) disposés parallèlement entre eux.

3. Dispositif (24) selon la revendication 1 ou 2, **caractérisé en ce que** l'unité de base (4) est réalisée sensiblement en forme de U par référence à une coupe transversale et comporte deux branches (19, 20) qui comportent des orifices de réception (27) correspondant chacun aux éléments de crochet (25).

4. Dispositif (24) selon l'une quelconque des revendications 1 à 3, **caractérisé en ce que** l'élément de support (2) et l'écarteur (13) peuvent être orientés l'un par rapport à l'autre au moyen d'un élément de positionnement (28).

5. Dispositif (24) selon l'une quelconque des revendications 1 à 4, **caractérisé en ce que** l'élément de support (2) et l'écarteur (13) sont vissés l'un à l'autre.

6. Dispositif (24) selon 1'une quelconque des revendications 1 à 5, **caractérisé en ce que** sur l'élément de support (2) est disposé un élément de fixation (29), qui est orienté vers le module solaire et qui peut s'engager par conjugaison de forme dans un engagement (30) correspondant du module solaire.

7. Dispositif (24) selon l'une quelconque des revendications 1 à 6, **caractérisé en ce que** l'élément de fixation (29) est propre à être vissé contre l'élément de support (2).
